# EUROPEAN PATENT APPLICATION

(11) **EP 1 603 305 A1**
(43) Date of publication of application: **07.12.2005**
(21) Application number: 05104510.2
(22) Date of filing: 26.05.2005
(51) Int. Cl.: H04L 29/06

(54) **Method for header compression in packet-based telecommunication systems**

(30) Priority: 02.06.2004 IL 16230604
(71) Applicant: ECI TELECOM LTD., 49517 Petach Tikva (IL)
(72) Inventor: Nakash, Shaul, 44627 Kfar Sava (IL)
(74) Representative: Modiano, Micaela Nadia

(57) **Abstract**

A technology for transmitting compressed data packets via a packet-based communications path extending between a compressing node and a decompressing node, the technology comprises transmitting groups of one or more compressed packets wherein each two consecutive groups are separated from each other by single partially compressed packets. The compressed packets are data packets each having a compressed header and comprising a first compression context ID (CID) for further decompression of the compressed data packets, while the partially compressed packets are data packets each having a partially compressed header and a second CID.

## Description

### Field of the invention

The invention relates to a new method of transmitting compressed data packets in packet-based telecommunication systems of various types.

### Background of the invention

Amounts of data to be transmitted via modem communication networks grow daily. An important source of packet-data to be communicated is the rapidly expanding mobile communication technology, where base stations connect to network controllers via radio access networks (RAN). As usage of RAN data services increases, there is a need to effectively handle the network growth and this is optimized when the RAN is based on IP, as well as a globally harmonized all-IP Network Core.

In low or medium speed packet-based paths, when the header fields form a significant portion of the packet used for transporting the actual payload (e.g., voice), there is a large interest in doing header compression.

US patent application 2004/0034708 describes a technology for fast IP headers compression initialization and also refers to a number of known methods of IP header compression; the whole patent description is incorporated hereby by reference.

A general approach to packet compression comprises peeling the packet headers at a so-called compressor and further restoring their headers at a so-called decompressor. In order to work properly, each header compression technique requires an ***Initialization Phase*** during which the compressor and the decompressor build their respective compression-decompression context.

The compressor must then have enough confidence that the decompressor has the proper context before a transition to a higher compression ratio takes place. This confidence may be achieved using explicit feedback from the decompressor to the compressor (so-called hard state arrangement), or by sending a number of context initialization packets repeatedly for a large enough interval (soft state).

The maximum compression ratio achievable on a given path largely depends on the header compression technique used thereon. However, it takes several phases of confidence/transition before reaching the maximum compression ratio of a given compression technique.

While the context initialization phase is necessary to ensure that higher compression efficiency may be achieved, it implies a certain delay for which the compression efficiency is far from optimal.

A document called RFC (Request For Comments) 2507, describes a header-compression mechanism suitable for IP packets. This mechanism relies on many fields being constant or predictable in consecutive packets belonging to the same ***packet stream*****,** and identified by a Context Identifier *(**CID**)*.
Header fields that do not change between packets (***constant***) and fields containing values that can be inferred from other values (***Inferred***) need not be transmitted at all. Only fields that change often (***Random***), need to be transmitted in every header. The general principle of header compression according to RFC 2507 is to occasionally send a packet with a full header (***FH***) per packet stream; subsequent compressed headers (***CH***) refer to the context established by the FH. Use of a so-called compression slow-start (***CSS***) mechanism and of periodic header refreshments allows minimizing periods of packet discard in case a header that changes the context is lost.

With the CSS method, the initialization phase is said to begin when an FH packet is sent to update, rather than refresh, the context of a packet stream at the receiver. The transmission frequency for CH is small at an initial stage, and is exponentially increased thereafter. That is, the number of CH packets transmitted between neighboring FH packets belonging to the same packet stream is increased in the following manner: 1, 2, 4, 8, .... up to a predefined limit, after which FH is sent periodically, once per predefined time interval or number of CH packets (whichever occurs first). Therefore, transmitting FH packets using the CSS method renders the transmission system to be stable, since if any FH packet is lost during transmission, the following FH packet will re-deliver the lost header information.

However, the cost of header refreshments in terms of bandwidth are higher than similar costs for hard state schemes where full headers must be acknowledged by the decompressor before compressed headers may be sent.

The published US patent application 2003/0123485 (which is incorporated herein by reference) proposes a feedback-based sub-mechanism which offers a better transmission efficiency compared to the prior art described in RFC 2507. This is done by conditioning the transmission of a next FH packet on receiving a feedback from the decompressor, indicating whether the previous FH packet has been received.

The published US patent application 2004/0034708 proposes a session-based mechanism for fast IP headers compression initialization, wherein the compressor and decompressor take an active part in the establishment of a session between the origination and destination IP nodes, and the compression process involves exchanging of session initialization messages to initiallize either dynamic or static portions of the decompression context.

Since methods requiring organizing a feedback between a compressing unit and a decompressing unit are quite complex arrangements, there is a need for new simple soft state compression method characterized by an improved transmission efficiency.

### Summary of the Invention

There is proposed a method of transmitting compressed data packets over a packet-based communications path between a compressing node and a decompressing node, the method comprises transmitting groups of one or more compressed packets separated by single partially compressed packets, wherein
the compressed packets being data packets each having a compressed header *(**CH**)* and containing a first compression context ID (CID) for further decompression of the compressed data packets,
the partially compressed packets being data packets each having a partially compressed header (so-called reduced full header, ***rFH***) and a second CID.

Both the first CID and the second CID serve for indicating a suitable context to be used for restoring the uncompressed packet from a packet received at a decompressing node. Preferably, the first CID is essentially identical to the second CID and they both can be called just CID.

To provide the above, the method may therefore comprise
a) obtaining the compressed packets from uncompressed packets of a packet stream, and
b) obtaining the partially compressed packets from uncompressed packets of the packet stream, wherein
for obtaining each of the compressed packets, the method includes
a1) reducing, from a full header of an uncompressed packet of the packet stream, said constant and/or inferable fields and also context fields defining said packet stream,
a2) introducing said CID,
a3) inserting a mark indicating a compressed packet (CH Packet Mark), and for obtaining each of the partially compressed packets, the method includes
b1) reducing such fields of a full header of an uncompressed packet of the packet stream, that are constant and/or inferable in packets of a particular packet type to which the packet stream belongs,
b2) introducing said CID,
b3) inserting a mark indicating a partially compressed packet (rFH Packet Mark).

In the frame of step (b), the method may optionally comprise inserting, in each of the partially compressed packets, a field indicating the packet type (Packet Type field).

To be more specific, the constant fields are constant for a particular packet type (for example, IPv4) and can be restored when the packet type is known or recognized. Example of a constant fields is Version=4 in packet header when packet type is IPv4. The inferable fields are those that can be inferred (calculated) from other fields/values carried by the packet; for example, the field "Length" in IPv4 packet header may be inferred from the physical packet length. The context fields are fields that define the packet stream. These can be, for example, fields carrying the IP source and destination addresses in packet types of IPv4.

It should be noted that the full header of an uncompressed packet may comprise random fields; if such fields exist, they should be transmitted as are, without any compression.

Sometimes the full header may comprise one or more so-called interface-related fields which may be quite long, but rarely change. For example such field may be the MAC source and destination addresses in compressed Ethernet paths. According to one version of the proposed method, the I/F-related field(s) can be periodically transmitted from the compression node to the decompression node by appending thereof to any partially compressed packet. The periodicity of transmitting such I/F-related fields is quite slow (say, once a second), so they "ride" seldom on partially compressed packets and thus do not significantly affect the bandwidth limitations.

The packet types supported in the system and actions required to be performed per packet type can be pre-configured or pre-negotiated between the compression node and the decompression node, while the pre-negotiation can be done by dynamic messaging over the said path. For example, the peers may agree to only compress/decompress non-fragmented IPv4 packets carrying UDP headers, in which case the CH and rFH packets may not include the optional Packet Type field. The rFH and the CH packets are distinguished from packets that are not part of compression/decompression agreements via the layer 2 header field (e.g., PPP Protocol field, or Ethertype). The dynamic messaging may be performed similar to the messaging accepted in hard state arrangements, but the dynamic messaging is done globally per packet type and not per packet stream, thus much more efficient.

The proposed method thereby can significantly increase transmission efficiency during the transition phase before reaching the maximum compression ratio, compared with the prior art described in RFC 2507. Actually, according to the newly proposed method, the full-header (FH) packets are replaced with the partially-compressed (rFH) packets.

This is especially important in paths with low spare bandwidth (BW) that should support high rates of stream setups (e.g., mobile phone calls). It may also be useful to expedite path recovery/switch-over operations following network failures, when all packet streams move to the initialization stage at once, and thus to avoid mobile phone call drops during a path switch-over.

The number of the compressed header (CH) packets between two partially compressed header (rFH) packets may vary according to any pre-defned scheme, e.g., according to the CSS scheme as per RFC 2507. Preferably (and as per RFC 2507), the CID enables decompression of the compressed header fields at the decompression node.

According to a second aspect of the invention, there is proposed a system comprising at least a compressing node and a decompressing node and a packet-based communications path there-between, the system being capable of performing the method as described above.

According to yet a further aspect of the invention, there is provided a software product comprising software implementable instructions and/or data for carrying out the above-described method. There is also provided a carrier medium comprising the software product, and being suitable for installing in the packet-based network intended for conducting there-through compressed packets.

Further details of the invention will become apparent as the description proceeds.

### Brief description of the drawings

The invention will be further described and illustrated with the aid of nonlimiting drawings, in which:
**Fig. 1** schematically illustrates a diagram of the combined network via which compressed packets are to be transmitted.
**Fig. 2** schematically illustrates one embodiment of the proposed order of transmitting the compressed packets.
**Fig. 3** schematically illustrates some type of an uncompressed (FH) packet which contains the data payload and various fields in the data header.
**Figs. 4a and 4b** are schematic examples respectively showing a partially compressed (rFH) packet and a compressed (CH) packet.

### Detailed description of the preferred embodiments

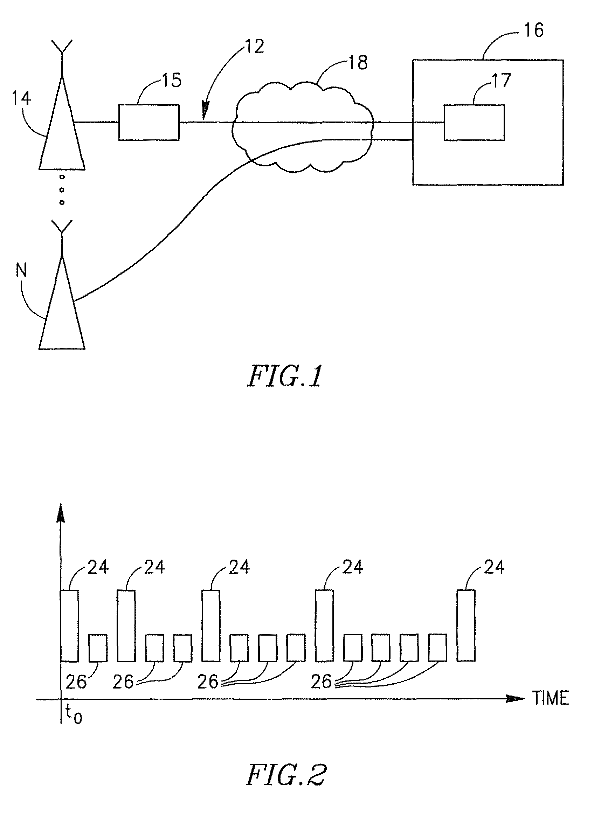

**Fig. 1** illustrates a simplified system 10 where the proposed method can be implemented. Let us suppose that, in this example, a packet-based path 12 connects a terminal station 14 and a base station 16 via a transport network 18. The path 12 should compress IP/UDP packets that carry multiple mobile voice streams, and has a very low spare bandwidth above the bandwidth that is consumed by the voice payload itself. IP/UDP headers are rather long and, be the voice traffic transmitted over this regular FH packet during initialization stage, it would require excessive bandwidth. To this end, the voice packets received from the terminal station 14, are compressed at a compressing node 15, transmitted via the path 12 in the compressed form and then decompressed at the decompressing node 17. At the other path direction, 17 is the compressor while 15 is the decompressor. The base station 16 may have similar compressed paths with more than one terminal stations (2 through N).

**Fig. 2** schematically illustrates one proposed example of transmitting compressed packets of a certain packet stream via a compressed path such as 12. Before starting transmission of a new packet stream, there is performed the path initiation, as well as the pre-negotiation or pre-configuring of the compressing node 15 and the decompressing node 17 to agree on compressing/decompressing certain packet types and the required actions per packet type. At time to the new packet stream starts to be compressed: node 15 transmits a partially compressed header packet (rFH) 24, then sends one compressed header packet (CH) 26. Both the packet 24, and the packet 26 comprise indication of the compression context (CID) which is selected for use in the current transmission (i.e., in the new packet stream). The CID actually identifies the packet stream, indicating to the decompression node the context that should be used when decompressing the compressed header. The rFH packets 24 are being periodically sent with an exponentially increasing period after a change in the context such as the one that occurred at time to, up to a moment (not shown) when the context is changed so the process will be repeated from the beginning.

The rFH packets 24 enable using the bandwidth much more efficiently at the initialization stage, than in the methods that use full header packets (FH) between the compressed packets (24).

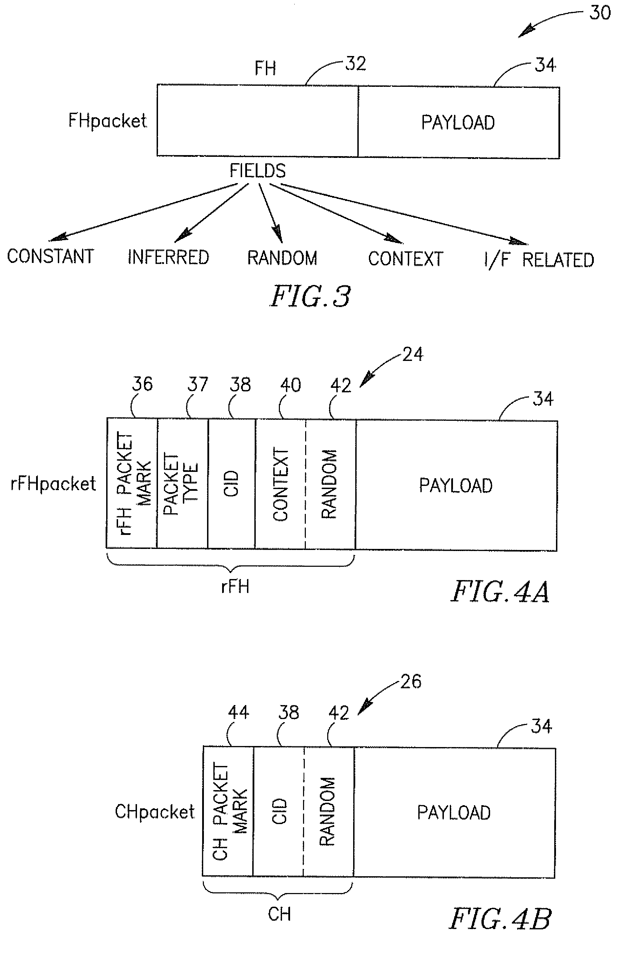

**Fig. 3** illustrates an example of a standard complete (uncompressed, full header FH) data packet 30. The packet may be, for example, an IPv4 packet, or, in case of compressed-Ethernt paths, an Ethernet packet. The packet 30 comprises its full header 32 and a payload 34. The full header 32 consists of a number of sub-headers; for example, it is an outer Ethernet header (in case the packet 30 is an Ethernet packet), an inner IPv4 and UDP headers and possibly other inner headers (not shown). The full header comprises fields which are constant for the packet type, like the Ethertype field in the Ethernet header indicating that layer 3 is IPv4, and the Version field in the IPv4 header. The header also carries so-called inferable fields like IP Length, and context fields such as IP and UDP addresses that define the packet stream. The full header may comprise random fields as well. The payload 34 comprises a totally random field (e.g., voice data to be transmitted). Only the random fields cannot be compressed, and should be transmitted as are. As will be shown in Figs. 4a and 4b, the context fields are sent within the rFH packets and are suppressed in the CH packets, while the constant and inferred fields are neither transmitted in rFH nor in CH packets.

Fields carrying MAC addresses (being large fields that characterize an interface rather than a packet stream) may be preconfigured or pre-negotiated. However preferably, such IF/related fields are made to periodically 'ride' on rFH packets. In the latter case, presence of the MAC addresses being appended to rFH packets may be indicated by the Packet Mark preceding rFH and CH packet (see Figs. 4a and 4b).

**Fig. 4a** illustrates an example of a partially compressed packet (rFH packet) 24 obtained from the packet 30. One can note that all constant and inferred fields are dropped from the header, to reduce the length of the packet. The reduced header rFH of the packet 24 contains a field 36 called Packet Mark 'rFH' being a mark of the partially compressed packet and may also indicate whether any I/F related field(s) are appended to the packet. The reduced header may comprise an optional Packet Type field 37 which indicates from which type of the standard packet 30 the packet 24 is obtained (for example, rFH for IPv4). The rFH of the packet 24 also comprises the CID field 38, the context fields 40 associated with the given CID, and random header fields 42 (if any). The packet 24 carries the payload 34 which is totally random and thus uncompressed.

Having received both the CID and the context fields, the decompression node may build a correspondence table or use a pre-built such table for further restoring the compressed packets based on their CID.

**Fig. 4b** illustrates a compressed packet (CH packet) 26, i.e. the packet with a compressed header, as indicated by its Packet Mark 'CH' 44. It should be noticed that rFH packet is almost as short as the CH packet, since both packets do not carry the constant and inferable fields.

One should appreciate that the drawings illustrate only examples of implementing the proposed method, and various modifications of the proposed technology should be considered to be part of the invention, whenever covered by the claims which follow.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method of transmitting compressed data packets via a packet-based communications path extending between a compressing node and a decompressing node, the method comprises transmitting groups of one or more compressed packets (26) wherein each two consecutive groups are separated from each other by single partially compressed packets (24), and wherein
the compressed packets (26) being data packets each having a compressed header, and comprising a first compression context ID, first CID (38 of 26), for further decompression of the compressed data packets, and
the partially compressed packets being data packets each having a partially compressed header, and a second CID (38 of 24).

2. The method according to Claim 1, comprising
a) obtaining the compressed packets (26) from uncompressed packets (30) of a packet stream, and
b) obtaining the partially compressed packets (24) from uncompressed packets (30) of the packet stream, wherein
for obtaining each of the compressed packets (26), the method includes:
a1) reducing, from a full header (32) of an uncompressed packet of the packet stream, said constant and/or inferable fields and also context fields defining said packet stream,
a2) introducing said first CID (38 of 26),
a3) inserting a compressed packet's mark (44), and for obtaining each of the partially compressed packets (24), the method includes:
b1) reducing such fields of a full header (32) of an uncompressed packet (30) of the packet stream, that are constant and/or inferable in packets of a particular packet type to which the packet stream belongs,
b2) introducing said second CID (38 of 24),
b3) inserting a partially compressed packet's mark (36).

3. The method according to Claim 1 or 2, wherein said first CID (38 of 26) is essentially identical to said second CID (38 of 24).

4. The method according to Claim 2 or 3, further comprising inserting in each of the partially compressed packet (24) a field (37) indicating the packet type.

5. The method according to any one of the preceding claims, comprising determining packet types to be supported and actions to be executed per packet type by carrying out a negotiation step between said compressing node and said decompressing node, or by pre-configuring said compressing node and said decompressing node.

6. The method according to any one of the preceding claims, wherein a number of the compressed packets (26) separating two consecutive partially compressed packets (24) is defined according to a selected function.

7. The method according to any one of the preceding claims, further comprising transmitting one or more interface-related fields (I/F-related fields) from the compression node (15 or 17) to the decompression node (17 or 15) by periodically appending said I/F-related fields to a partially compressed packet (24).

8. The method according to any one of claims 1 to 6, further comprising either pre-configuring the compression node (15 or 17) and the decompression node (17 or 15), or carrying out a negotiation step between the compression node and the decompression node for performing compressed transmission of interface-related fields (I/F-related fields).

9. A system comprising at least a compressing node (15 or 17) and a decompressing node (17 or 15) and a packet-based communications network path (12) extending there-between, the system being capable of performing the method according to any one of Claims 1 to 8.

10. A software product comprising software implementable instructions and/or data for carrying out the method according to Claims 1 to 8.

11. A carrier medium comprising the software product according to Claim 10, suitable for being installed in the compressing node (15 or 17) and the decompressing node (17 or 15) of the packet-based network.
